# FASCICULE DE BREVET EUROPEEN

(11) **EP 2 999 546 B1**
(45) Date de publication et mention de la délivrance du brevet: **22.03.2017**
(21) Numéro de dépôt: 14729704.8
(22) Date de dépôt: 15.05.2014
(51) Int. Cl.: B05B 1/16, B05B 1/30, B05B 15/06, B05B 12/08, B05B 1/28, B05B 15/02, B05B 15/00, A01M 7/00, G05D 16/06, G05D 16/18

(54) **DISPOSITIF SUPPORT DE BUSES À TÊTE PORTE-BUSES ROTATIVE**
DÜSENHALTVORRICHTUNG MIT DREHENDEM DÜSENKOPF
SUPPORTING DEVICE FOR NOZZLES WITH A ROTATING NOZZLE HEAD

(30) Priorité: 22.05.2013 FR 1354606
(43) Date de publication de la demande: 30.03.2016
(73) Titulaire: Exel Industries, 75009 Paris (FR)
(72) Inventeur: BALLU, Patrick Jean Marie, F-51100 Reims (FR)
(74) Mandataire: Chevalier, Renaud Philippe
(86) Numéro de dépôt international: PCT/FR2014/051133
(87) Numéro de publication internationale: WO 2014/188110

(56) Documents cités:
- EP-A1- 2 047 912
- EP-A1- 2 606 722
- EP-A1- 2 669 014
- WO-A1-2014/067785
- DE-U1-202004 011 673
- FR-A1- 2 264 612
- FR-A1- 2 290 254
- FR-A1- 2 558 922
- FR-A1- 2 655 571
- US-A- 2 429 779
- US-A- 5 529 758

## Description

L'invention concerne un dispositif support de buses qui est équipé d'une tête porte-buses montée rotative entre une pluralité de positions prédéterminées.

Ce type de dispositif support de buses est généralement utilisé dans une installation de pulvérisation de liquides, pour laquelle il est nécessaire de pouvoir disposer de buses de plusieurs formes ou dimensions qui puissent être permutées de façon instantanée.

Un tel support de buses, décrit et représenté dans le document FR -A-2655571 par exemple, comporte habituellement un corps qui présente un passage d'entrée d'un fluide et au moins un passage de sortie, et qui comporte un tronçon de révolution formant moyeu qui s'étend autour d'un axe de rotation.

De plus, une tête porte-buses, qui est conçue pour porter simultanément au moins deux buses, est montée à rotation sur le moyeu du corps autour de l'axe de rotation.

Complémentairement, la tête porte-buses est immobilisée en rotation sur le corps par des moyens d'immobilisation, dans une pluralité de positions prédéterminées dans au moins certaines d'entre elles une des buses est reliée au passage de sortie du corps.

Les moyens d'immobilisation sont conçus pour permettre la permutation d'une buse avec une autre, ou d'une position prédéterminée avec une autre, par une simple rotation de la tête porte-buses.

Selon ce type de dispositif support de buses, la rotation de la tête porte-buses est effectuée manuellement, ce qui demande l'intervention d'un opérateur sur la tête porte-buses.

L'invention vise notamment à proposer un dispositif support de buses permettant l'entraînement de la tête porte-buses d'une position à une autre au moyen d'un actionneur, de sorte que la tête porte-buses est apte à être entraînée en rotation à distance.

Dans ce but, l'invention propose un dispositif support de buses du type comportant :
- un corps qui présente un passage d'entrée d'un fluide et au moins un passage de sortie, et qui comporte un tronçon de révolution formant moyeu qui s'étend autour d'un axe de rotation,
- une tête porte-buses qui est montée à rotation sur le moyeu du corps autour de l'axe de rotation, et qui est conçue pour porter simultanément au moins deux buses, et
- des moyens d'immobilisation pour immobiliser la tête porte-buses en rotation sur le corps dans une pluralité de positions prédéterminées, dans au moins certaines d'entre elles une des buses est reliée au passage de sortie du corps, caractérisé en ce que le dispositif est équipé d'un mécanisme d'entraînement de la tête porte-buses en rotation comportant :
- une pluralité de dents d'entraînement qui sont agencées de manière régulière autour de l'axe de rotation sur la tête porte-buses,
- un élément d'entraînement équipé d'au moins un cliquet d'entraînement escamotable qui présente une extrémité libre adaptée pour pousser les dents d'entraînement successivement, l'élément d'entraînement étant monté oscillant sur le corps, autour de l'axe de rotation, suivant un mouvement aller au cours duquel le cliquet entraîne de façon incrémentale la tête porte-buses jusqu'à une position prédéterminée par coopération avec une des dents d'entraînement, et un mouvement retour au cours duquel le cliquet est escamoté,
- un actionneur comportant une tige d'actionnement qui est liée en mouvement sur l'élément d'entraînement pour entraîner l'élément d'entraînement en déplacement oscillatoire.

Le mécanisme d'entraînement permet d'entraîner la tête porte-buses dans chacune de ses positions prédéterminées sans intervention manuelle.

L'actionneur est un vérin qui entraîne en déplacement la tige d'actionnement suivant une direction perpendiculaire à l'axe de rotation entre une position sortie et une position rentrée, la tige d'actionnement étant équipée d'un doigt de liaison qui s'étend parallèlement à l'axe de rotation et qui présente une extrémité libre coopérant avec un logement complémentaire délimité par l'élément d'entraînement, de façon à entraîner l'élément d'entraînement en déplacement oscillatoire par mouvement de va et vient de la tige d'actionnement.

Le vérin est un actionneur qui présente l'avantage d'être peu encombrant et il peut être alimenté par un fluide, comme de l'air comprimé.

Selon une autre caractéristique, l'élément d'entraînement présente la forme d'une bague annulaire qui est montée oscillante sur le moyeu du corps, autour de l'axe de rotation, de façon amovible.

Cette caractéristique offre la possibilité de retirer l'élément d'entraînement, notamment pour le remplacer en cas de casse, ou pour monter le dispositif porte-buses dans une configuration manuelle dans laquelle il est dépourvu de mécanisme d'entraînement.

Aussi, le cliquet présente une forme d'arc de cercle qui s'étend globalement autour de l'axe de rotation, depuis une embase déformable élastiquement, jusqu'à une extrémité libre adaptée pour pousser les dents d'entraînement successivement, autour de l'axe de rotation.

Une telle conception permet d'obtenir un cliquet qui est escamotable radialement par déformation élastique et qui peut être réalisé en une seule pièce avec l'élément d'entraînement.

Selon un autre aspect, les moyens d'immobilisation comportent une bague d'immobilisation annulaire comportant au moins un élément d'immobilisation qui présente une excroissance radiale conçue pour coopérer avec une série de cavités complémentaires délimitées chacune sur la tête porte-buses de façon à immobiliser ladite tête dans ses position prédéterminées incrémentalement, l'excroissance étant escamotable radialement pour permettre la rotation de la tête porte-buses entre deux positions prédéterminées.

De plus, la bague d'immobilisation comporte des moyens de solidarisation en rotation sur le moyeu du corps, autour de l'axe de rotation, par coopération de forme, et lesdits moyens de solidarisation sont conçus pour permettre le démontage de la bague d'immobilisation sur le corps associé.

Cette caractéristique permet notamment le remplacement de la bague d'immobilisation et permet aussi le démontage des autres pièces montées sur le moyeu du corps.

Selon un autre aspect, le dispositif support de buses comporte un dispositif anti-goutte comprenant :
- une première chambre dans laquelle le passage d'entrée et le passage de sortie débouchent,
- une seconde chambre juxtaposée à la première chambre,
- une première membrane obturatrice qui est conçue pour être entraînée dans une position de fermeture dans laquelle elle interrompt la communication entre le passage d'entrée et le passage de sortie, et une seconde membrane obturatrice qui est adossée à la première membrane et qui présente une aire supérieure à l'aire de la première membrane, l'ensemble constitué par la première membrane et la seconde membrane étant interposé entre la première chambre et la seconde chambre,
- un organe de commande qui permet d'augmenter la pression dans la seconde chambre de sorte que la seconde membrane applique une force sur la première membrane pour entraîner la première membrane dans sa position de fermeture.

La différence d'aire entre la première membrane et la seconde membrane permet de démultiplier la force exercée sur la seconde membrane, grâce à quoi il est possible de réduire la pression nécessaire et suffisante dans la seconde chambre pour entraîner la première membrane dans sa position de fermeture.

De plus, le dispositif support de buses comporte :
- un premier bouchon tubulaire qui est vissé sur le corps et qui délimite un premier tronçon de serrage annulaire plaquant axialement un bord périphérique de la première membrane contre un épaulement formé dans le corps, et une butée axiale bloquant axialement la tête porte-buses sur le corps, et
- un second bouchon borgne qui est vissé sur le premier bouchon et qui comporte un second tronçon de serrage annulaire plaquant axialement un bord périphérique de la seconde membrane contre un épaulement formé dans le premier bouchon.

En outre, le second bouchon est équipé d'une première prise permettant son dévissage manuel, et une seconde prise adaptée pour coopérer avec un outil permettant le dévissage du second bouchon.

Aussi, le second bouchon comporte un premier insert formant raccord pour l'alimentation en fluide sous pression de la seconde chambre, et un second insert formant raccord pour l'alimentation en fluide sous pression d'un dispositif support de buses supplémentaire depuis la seconde chambre.

Cette caractéristique améliore la compacité et favorise le montage du dispositif support de buses en série avec d'autres dispositifs.

Selon un autre aspect, le dispositif support de buses comporte un dispositif d'éclairage conçu pour éclairer au moins le spectre de pulvérisation du fluide éjecté par le dispositif support de buses.

Enfin, le dispositif support de buses comporte un élément de nettoyage qui est agencé dans le passage d'entrée pour rendre le fluide turbulent en s'opposant en partie à son écoulement.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée, qui illustre un dispositif support de buses équipé d'un mécanisme d'entraînement de la tête porte-buses, selon l'invention ;
- la figure 2 est une vue en perspective rassemblée, qui illustre le dispositif support de buses de la figure 1 ;
- la figure 3 est une vue en coupe axiale, qui illustre l'agencement de la tête porte-buses sur le corps du dispositif support de buses de la figure 1 ;
- la figure 4 est une vue en coupe radiale selon la ligne 4-4 de la figure 3, qui illustre les moyens d'immobilisation de la tête porte-buses ;
- la figure 5 est une vue en coupe radiale selon la ligne 5-5 de la figure 3, qui illustre l'élément d'entraînement oscillant de la tête porte-buses en rotation ;
- la figure 6 est une vue éclatée en perspective, qui illustre une variante de réalisation comportant une tête porte-buses entraînée manuellement en rotation.

Dans la description et les revendications, pour clarifier la description et les revendications, on adoptera à titre non limitatif la terminologie longitudinal, vertical et transversal en référence au trièdre L, V, T indiqué aux figures, dont la direction longitudinale est parallèle à l'axe A du dispositif support de buses.

Aussi, on utilisera à titre non limitatif les expressions « axial » et « radial » pour désigner une direction parallèle à l'axe A de rotation et une direction perpendiculaire à l'axe A de rotation respectivement.

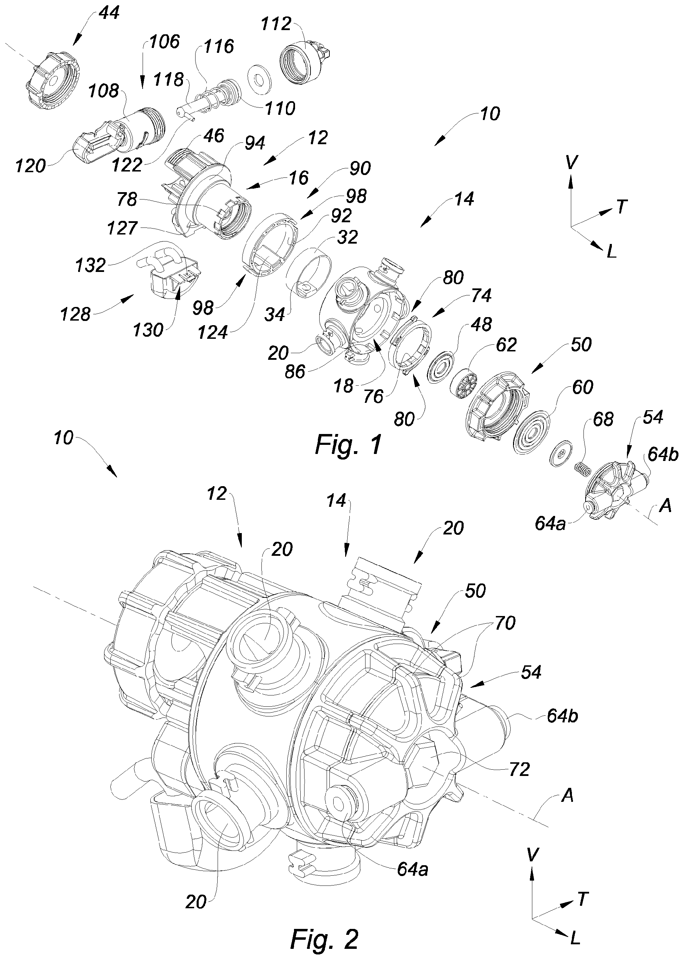

On a représenté à la figure 1 un dispositif support de buses 10 qui comporte un corps 12 et une tête porte-buses 14 montée à rotation sur le corps 12 autour d'un axe A de rotation.

A cet effet, le corps 12 délimite un tronçon cylindrique formant moyeu 16 autour de l'axe A. La tête porte-buses 14, de forme annulaire complémentaire, est délimitée par une face annulaire intérieure 18 qui coopère avec le moyeu 16.

De plus, la tête porte-buses 14 est équipée de cinq bouches de sortie 20 qui s'étendent radialement et qui sont réparties de manière régulière autour de l'axe A de rotation, à la périphérie de la tête porte-buses 14.

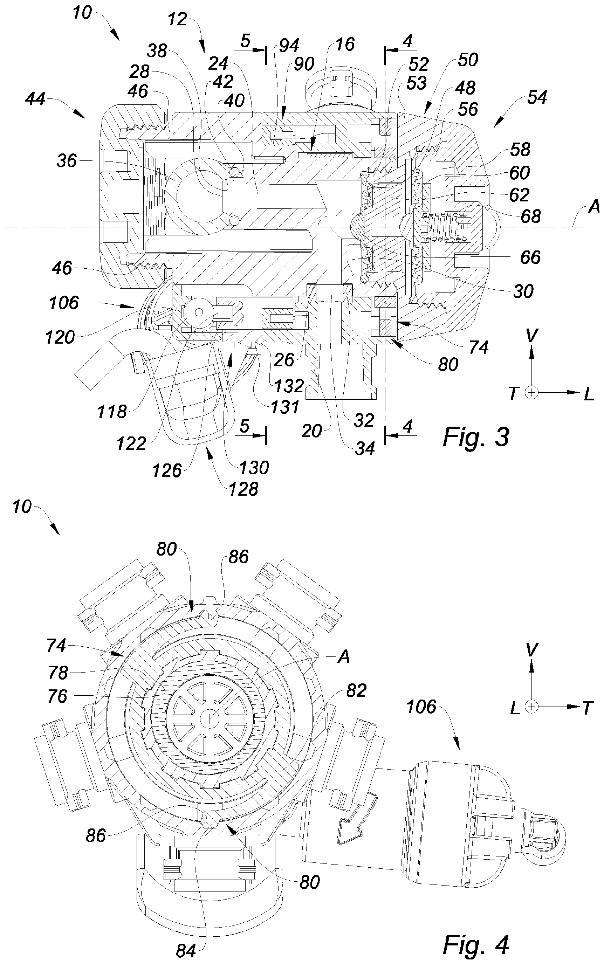

Chaque bouche de sortie 20, qui est destinée à être équipée d'une buse (non représentée) s'étendant radialement et débouchant dans la face annulaire intérieure 18 de la tête porte-buses 14.Complémentairement, comme on peut le voir à la figure 3, le corps 12 présente un passage d'entrée 24 et un passage de sortie 26 d'un fluide.

Le passage d'entrée 24 s'étend axialement suivant l'axe A depuis un orifice d'entrée 28 jusqu'à une première chambre 30.

Le passage de sortie 26 s'étend depuis la première chambre 30 par un tronçon axial suivant l'axe A, jusqu'à la face externe du moyeu 16 par un tronçon radial.

La première chambre 30 présente une forme globalement cylindrique autour de l'axe A de rotation.

Avantageusement, le dispositif support de buses 10 comporte une bague d'étanchéité 32 qui est montée serrée sur le moyeu 16 et qui délimite un trou 34 de passage agencé à l'extrémité du passage de sortie 26.

Le dispositif support de buses 10 est conçu pour être raccordé à un tuyau 36 d'alimentation, illustré à la figure 3, qui est percé d'un trou 38 d'axe perpendiculaire à l'axe du tuyau 36.

Les bords du trou 38 pénètrent dans une gorge 40 du corps 12, qui entoure l'orifice d'entrée 28 du passage d'entrée 24 et qui est pourvu d'un joint torique 42 d'étanchéité.

De plus, le corps 12 forme deux pattes 46 saillantes axialement sur lesquelles une pièce de fixation 44 est vissée pour serrer le tuyau d'alimentation 36 contre le joint torique 42.

Selon un autre aspect, le dispositif support de buses 10 comporte un dispositif anti-goutte comprenant une première membrane 48 obturatrice circulaire qui s'étend radialement et qui délimite la première chambre 30.

A cet effet, la première membrane 48 est maintenue par un premier bouchon 50 creux tubulaire qui est vissé sur le corps 12.

Le premier bouchon 50 comporte un premier tronçon de serrage 52 cylindrique fileté qui plaque axialement le bord périphérique de la première membrane 48 sur un épaulement du corps 12 de façon étanche.

Comme on peut le voir à la figure 3, le premier bouchon 50 comporte une partie annulaire formant butée 53 axiale qui bloque axialement la tête porte-buses 14 sur le moyeu 16.

Aussi, le dispositif anti-goutte est équipé d'un second bouchon 54 qui comporte un second tronçon de serrage 56 cylindrique fileté vissé sur le premier bouchon 50, suivant l'axe A de rotation, d'un côté opposé au tronçon de serrage 52 du premier bouchon 50.

Le second bouchon 54 délimite une seconde chambre 58 de forme globalement cylindrique autour de l'axe A, qui est délimitée par une seconde membrane 60.

A cet effet, la seconde membrane 60 s'étend radialement et elle est maintenue axialement par pincement entre le tronçon de serrage 56 du second bouchon 54 et un épaulement formé sur le premier bouchon 50.

De plus, une entretoise 62 de répartition d'effort est agencée dans le premier bouchon 50 et elle est interposée axialement entre la première membrane 48 et la seconde membrane 60 pour transmettre un effort axial de poussée entre les membranes.

Comme on peut le voir aux figures 1 et 2, le second bouchon 54 est équipé d'un premier insert 64a formant raccord pneumatique pour l'alimentation en air comprimé de la seconde chambre 58, et un second insert 64b formant raccord pneumatique pour l'alimentation en air comprimé d'un dispositif support de buses supplémentaire (non représenté), depuis la seconde chambre 58.

L'air comprimé est acheminé par un conduit (non représenté) qui est raccordé sur le premier insert 64a depuis une source d'alimentation commandée par un organe de commande (non représenté), de façon à faire varier la pression dans la seconde chambre 58.

Aussi, l'air comprimé est éjecté par un autre conduit (non représenté) qui est raccordé sur le second insert 64b et qui est raccordé sur un dispositif porte-buses supplémentaire par exemple.

Une telle conception permet la commande simultanée d'une pluralité de dispositifs support de buses 10 montés en série.

En augmentant la pression dans la seconde chambre 58, la seconde membrane 60 pousse la première membrane 48 par l'intermédiaire de l'entretoise 62, et la première membrane 48 est entraînée dans une position de fermeture, représentée à la figure 3, dans laquelle elle interrompt la communication entre le passage d'entrée 24 et le passage de sortie 26.

Dans ce but, la première membrane 48 comporte un bourrelet 66 central qui vient en appui axial contre l'extrémité du passage de sortie 26 et interrompt la communication entre le passage de sortie 26 et la première chambre 30.

Avantageusement, la seconde membrane 60 présente une aire, ou surface, supérieure à l'aire de la première membrane 48.

Cette caractéristique permet, à pression égale dans la seconde chambre 58, d'exercer une force plus grande sur l'entretoise 62 et la première membrane 48.

De plus, le dispositif anti-goutte comporte un ressort 68 hélicoïdal qui est interposé axialement entre le fond du second bouchon 54 et la partie centrale de la seconde membrane 48, pour exercer une pression axial sur les membranes dans le sens de fermeture de la première membrane 48.

Comme on peut le voir à la figure 2, le second bouchon 54 est équipé d'une première prise 70 à ailettes radiales permettant le dévissage manuel du second bouchon 54, et d'une seconde prise 72 de forme hexagonale adaptée pour coopérer avec un outil permettant le dévissage du second bouchon 54.

Selon un autre aspect, le dispositif support de buses 10 comporte des moyens d'immobilisation pour immobiliser la tête porte-buses 14 en rotation sur le corps 12, autour de l'axe A de rotation, dans une pluralité de positions prédéterminées.

En référence aux figures 1 et 4, les moyens d'immobilisation comportent une bague d'immobilisation 74 annulaire qui est montée solidaire en rotation sur le moyeu 16 du corps 12, autour de l'axe A de rotation.

A cet effet, la bague d'immobilisation 74 comporte une face interne annulaire délimitant une série de dents 76 qui coopèrent avec une série de cannelures 78 complémentaires formées à l'extrémité libre du moyeu 16.

Ainsi, la série de dents 76 et les cannelures 78 associées forment des moyens de solidarisation en rotation de la bague d'immobilisation 74 sur le moyeu 16 du corps 12 par coopération de forme, ces moyens de solidarisation étant conçus pour permettre le démontage de la bague d'immobilisation 74 sur le corps 12 par coulissement axial suivant l'axe A.

De plus, la bague d'immobilisation 74 comporte deux doigts d'immobilisation 80 diamétralement opposés, qui sont chacun globalement de la forme d'un arc de cercle.

Comme on peut le voir à la figure 4, chaque doigt d'immobilisation 80 s'étend globalement autour de l'axe A de rotation depuis une première extrémité formant embase 82 reliée sur la face périphérique externe de la bague d'immobilisation 74, jusqu'à une seconde extrémité libre formant excroissance radiale 84.

L'excroissance radiale 84 de chaque doigt d'immobilisation 80 est conçue pour coopérer avec une série de cavités 86 complémentaires délimitées chacune sur la face annulaire intérieure 18 de la tête porte-buses 14, de façon à immobiliser la tête porte-buses 14 dans chacune de ses positions prédéterminées.

Chaque doigt d'immobilisation 80, de part sa conception en longueur, est déformable élastiquement radialement, de sorte que chaque excroissance 84 est escamotable radialement pour permettre la rotation de la tête porte-buses 14 autour de l'axe A de rotation, entre deux positions prédéterminées.

Les cavités 86 sont ici au nombre de dix et elles sont réparties de manière régulière autour de l'axe A de rotation, de sorte que la tête porte-buses 14 est apte à être immobilisée dans dix positions prédéterminées décalées angulairement d'un dixième de tour.

Ces positions prédéterminées passent alternativement et successivement d'une position de pulvérisation dans laquelle une des bouches de sortie 20 est reliée, ou communique, avec le passage de sortie 26 pour le passage du fluide, à une position fermée dans laquelle la bouche de sortie 20 est décalée angulairement et n'est plus reliée avec le passage de sortie 26.

A titre non limitatif, les doigts d'immobilisation peuvent être remplacés par une bille à ressort (non représentée) qui est montée mobile radialement sur la bague d'immobilisation 74 et qui est conçue pour coopérer avec une série de cavités 86.

Selon un autre aspect, le dispositif support de buses 10 est équipé d'un mécanisme d'entraînement de la tête porte-buses 14 en rotation.

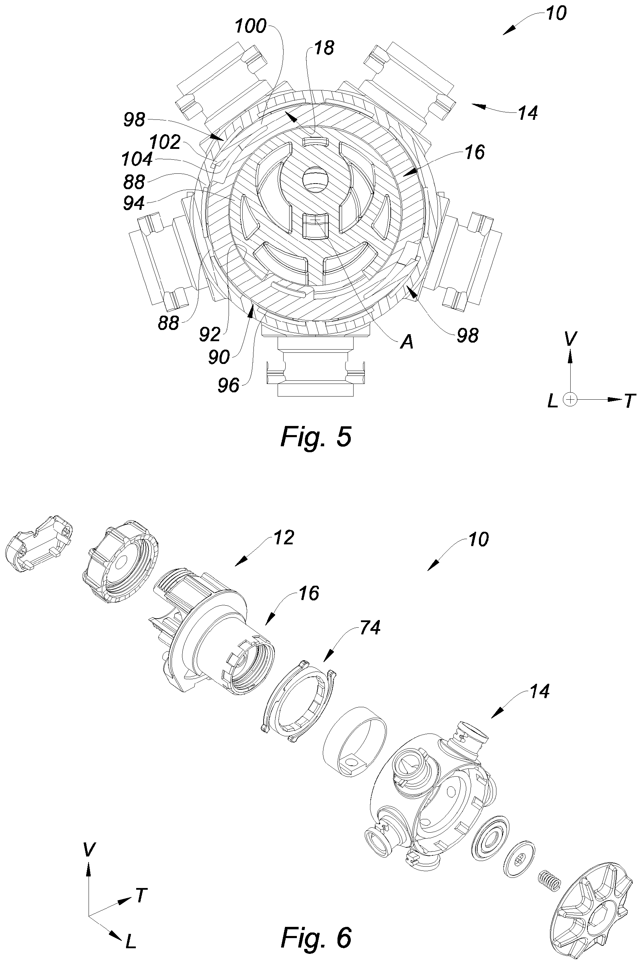

Selon la figure 5, le mécanisme d'entraînement comporte dix dents d'entraînement 88 saillantes radialement, qui sont ménagées sur la face annulaire intérieure 18 de la tête porte-buses 14 et qui sont réparties de manière régulière autour de l'axe A, et décalées angulairement d'un dixième de tour.

Complémentairement, le dispositif support de buses 10 comprend une bague 90 annulaire formant élément d'entraînement qui est montée oscillante sur le moyeu 16 du corps 12, autour de l'axe A de rotation.

La bague 90 est délimitée par une face interne 92 annulaire qui coopère avec un manchon 94 complémentaire du moyeu 16 pour permettre l'oscillation de la bague 90 d'entraînement, et par une face externe 96 annulaire dans laquelle sont formées deux cliquets 98 d'entraînement escamotables.

Chaque cliquet 98 présente globalement une forme d'arc de cercle qui s'étend autour de l'axe A de rotation, depuis une embase 100 reliée sur la bague 90, jusqu'à une extrémité libre 102 adaptée pour pousser les dents d'entraînement 88 successivement autour de l'axe A de rotation.

A cet effet, l'extrémité libre 102 de chaque cliquet 98 fait sensiblement saillie radialement vers l'extérieur par rapport à la face externe 96 de la bague 90.

De plus, chaque cliquet 98 est déformable élastiquement radialement entre une position d'entraînement, représentée à la figure 5, dans laquelle le cliquet 98 est rappelé élastiquement et dans laquelle le cliquet 98 est apte à coopérer avec une des dents d'entraînement 88 associée, et une position escamotée dans laquelle le cliquet 98 est escamoté radialement dans un logement 104, prévu à cet effet, qui est formé dans la face externe 96 de la bague 90.

Chaque cliquet 98 est ici réalisé venu de matière avec la bague 90, par injection de matière plastique par exemple.

La bague 90, formant élément d'entraînement, est montée oscillante sur le corps 12, autour de l'axe A de rotation, suivant un mouvement aller de pivotement au cours duquel chaque cliquet 98 entraîne de façon incrémentale la tête porte-buses 14 jusqu'à une position prédéterminée, par coopération avec une des dents d'entraînement 88, et un mouvement retour de pivotement au cours duquel chaque cliquet 98 est escamoté dans son logement 104 au contact d'une dent d'entraînement 88 suivante.

L'entraînement en oscillation de la bague 90 est réalisé au moyen d'un vérin 106 pneumatique simple effet.

Le vérin 106 comporte un corps 108 cylindrique dans lequel un piston 110 divise le volume du corps 108 en une première chambre (non représentée) alimentée en air comprimée via un connecteur 112 pneumatique, et une seconde chambre (non représentée) équipée d'un ressort 116 de rappel.

Le piston 110 est relié sur une tige 118 d'actionnement qui est entraînée en déplacement suivant une direction perpendiculaire à l'axe A de rotation, entre une position sortie, et une position rentrée vers laquelle la tige 118 est rappelée par le ressort 116.

L'extrémité libre de la tige 118 est logée dans un carter 120 de protection.

Le carter 120 permet aussi de fixer le vérin 106 sur le corps 12, ici au moyen de deux vis (non représentées).

De plus, la tige 118 d'actionnement est équipée d'un doigt 122 de liaison qui s'étend parallèlement à l'axe A et qui présente une extrémité libre coopérant avec la bague 90 d'entraînement.

A cet effet, la bague 90 comporte un palier 124 qui s'étend axialement et qui délimite un logement 126, illustré sur l'arrachement à la figure 3, dans lequel l'extrémité libre du doigt 122 de liaison est reçue, de sorte que la tige 118 du vérin 106 est liée en mouvement sur la bague 90 d'entraînement.

Le logement 126 présente une forme sensiblement oblongue qui s'étend radialement en longueur, pour permettre un débattement de l'extrémité libre du doigt 122 au cours de l'entraînement de la bague 90.

Le palier 124 s'étend à travers une lumière 127, qui est illustrée à la figure 1, et qui est ménagée dans le corps 12.

Ainsi, le mouvement de va et vient de la tige 118 du vérin 106 permet d'entraîner la bague 90 d'entraînement en déplacement oscillatoire autour de l'axe A.

En effet, lorsque la tige 118 du vérin 106 est entraînée depuis sa position rentrée, jusqu'à sa position sortie, la bague 90 est entraînée en pivotement autour de l'axe A de rotation suivant un premier sens de rotation, la bague 90 entraînant à son tour la tête porte-buses 14 d'un dixième de tour, depuis une position prédéterminée jusqu'à sa position prédéterminée suivante, au moyen des deux cliquets 98.

A l'inverse, lorsque la tige 118 du vérin 106 est entraînée depuis sa position sortie, jusqu'à sa position rentrée, la bague 90 est entraînée en pivotement autour de l'axe A suivant un second sens de rotation opposé, chaque cliquet 98 est alors escamoté pour permettre le retour de la bague 90 dans sa position initiale sans entraîner en pivotement la tête porte-buses 14.

Toutefois, à titre non limitatif, l'entraînement en oscillation de la bague 90 peut être réalisé par tout type d'actionneur, comme un actionneur du type comportant une tige entraînée en déplacement par électro-aimant, entre une position rentrée dans laquelle elle est rappelée par un ressort, et une position sortie.

Le mécanisme d'entraînement est par exemple piloté et commandé à distance par un opérateur au moyen d'un pupitre de commande (non représenté) qui permet de commander le vérin 106.

Selon un autre aspect, le dispositif support de buses 10 est équipé d'un dispositif d'éclairage 128 conçu pour éclairer le spectre de pulvérisation du fluide éjecté par la buse de la tête porte-buses 14 qui est alimentée en fluide, c'est-à-dire la buse qui est reliée sur le passage de sortie 26.

Le dispositif d'éclairage 128 comporte une série de diodes électroluminescentes alimentées en électricité par une batterie.

De plus, comme on peut le voir à la figure 1, le dispositif d'éclairage 128 comporte une patte 130 déformable élastiquement munie d'un ergot 131, qui coopère avec un logement 132 (visible à la figure 3) complémentaire formé sur le corps 12, pour permettre une fixation amovible et rapide par coopération de forme du dispositif d'éclairage 128 sur le corps 12.

Enfin, le dispositif support de buses 10 est équipé d'un élément de nettoyage (non représenté) de la première membrane 48.

L'élément de nettoyage est formé par une bosse qui est agencée dans le passage d'entrée 24, pour rendre le fluide turbulent en s'opposant en partie à son écoulement.

La turbulence ainsi créée permet une projection du fluide sur la première membrane 48 pour nettoyer et éviter le colmatage de la première membrane 48.

Comme décrit précédemment, le dispositif support de buses 10 selon l'invention permet l'entraînement en rotation de la tête porte-buses 14 à distance, par l'intermédiaire d'un actionneur, ici le vérin 106.

De plus, le dispositif support de buses 10 est conçu pour pouvoir être produit dans une configuration manuelle, illustrée à la figure 6, dans laquelle le dispositif est dépourvu de vérin 106, la tête porte-buses 14 étant entraînée manuellement par un opérateur.

Dans cette configuration manuelle, on remarque que le dispositif support de buses 10 est notamment dépourvu de la bague d'entraînement et du vérin 106 associé.

Toutefois, les autres pièces utilisées pour la réalisation du dispositif porte-buses 10 dans sa configuration manuelle sont identiques et interchangeables, ce qui évite la fabrication de pièces différentes supplémentaires.

En effet, les pièces qui sont montées sur le moyeu 16 du corps 12, comme la bague d'immobilisation 74, sont aptes à être retirées du corps 12 par coulissement axial sur le moyeu 16.Selon une variante de réalisation non représentée, le passage de sortie 26, un joint d'étanchéité associé, la bouche de sortie 20, ainsi que la buse associée de la tête porte-buse 14, sont parallèles, ou obliques par rapport à l'axe A, les bouches de sortie 20 et les buses associées de la tête porte-buses 14 s'étendent chacune axialement, de sorte que la tête porte-buses forme un barillet, plan ou cylindrique, monté à rotation autour de l'axe A de rotation, ou selon un axe oblique par rapport à cet axe A, les bouches d'entrées étant mise en communication alternativement avec le passage de sortie 24 26, et son joint, par rotation de la tête porte-buses 14.

## Revendications

1. Dispositif support de buses (10) du type comportant :
- un corps (12) qui présente un passage d'entrée (24) d'un fluide et au moins un passage de sortie (26), et qui comporte un tronçon de révolution formant moyeu (16) qui s'étend autour d'un axe (A) de rotation,
- une tête porte-buses (14) qui est montée à rotation sur le moyeu (16) du corps (12) autour de l'axe (A) de rotation, et qui est conçue pour porter simultanément au moins deux buses, et
- des moyens d'immobilisation (74, 86) pour immobiliser la tête porte-buses (14) en rotation sur le corps (12) dans une pluralité de positions prédéterminées, dans au moins certaines d'entre elles une des buses est reliée au passage de sortie (26) du corps (12),
**caractérisé en ce que** le dispositif (10) est équipé d'un mécanisme d'entraînement de la tête porte-buses (14) en rotation comportant :
- une pluralité de dents d'entraînement (88) qui sont agencées de manière régulière autour de l'axe (A) de rotation sur la tête porte-buses (14),
- un élément d'entraînement (90) équipé d'au moins un cliquet (98) d'entraînement escamotable qui présente une extrémité libre adaptée pour pousser les dents d'entraînement (88) successivement, l'élément d'entraînement (90) étant monté oscillant sur le corps (12), autour de l'axe (A) de rotation, suivant un mouvement aller au cours duquel le cliquet (98) entraîne de façon incrémentale la tête porte-buses (14) jusqu'à une position prédéterminée par coopération avec une des dents d'entraînement (88), et un mouvement retour au cours duquel le cliquet (98) est escamoté,
- un actionneur (106) comportant une tige (118) d'actionnement qui est liée en mouvement sur l'élément d'entraînement (90) pour entraîner l'élément d'entraînement (90) en déplacement oscillatoire.

2. Dispositif support de buses (10) selon la revendication 1, **caractérisé en ce que** l'actionneur (106) est un vérin qui entraîne en déplacement la tige (118) d'actionnement suivant une direction perpendiculaire à l'axe (A) de rotation entre une position sortie et une position rentrée, la tige (118) d'actionnement étant équipée d'un doigt (122) de liaison qui s'étend parallèlement à l'axe (A) de rotation et qui présente une extrémité libre coopérant avec un logement (126) complémentaire délimité par l'élément d'entraînement (90), de façon à entraîner l'élément d'entraînement (90) en déplacement oscillatoire par mouvement de va et vient de la tige (118) d'actionnement.

3. Dispositif support de buses (10) selon l'une quelconque des revendications précédentes, **caractérisé en ce que** l'élément d'entraînement (90) présente la forme d'une bague annulaire qui est montée oscillante sur le moyeu (16) du corps (12), autour de l'axe (A) de rotation, de façon amovible.

4. Dispositif support de buses (10) selon l'une quelconque des revendications précédentes, **caractérisé en ce que** le cliquet (98) présente une forme d'arc de cercle qui s'étend globalement autour de l'axe (A) de rotation, depuis une embase (100) déformable élastiquement, jusqu'à une extrémité libre (102) adaptée pour pousser les dents d'entraînement (88) successivement, autour de l'axe (A) de rotation.

5. Dispositif support de buses (10) selon l'une quelconque des revendications précédentes, **caractérisé en ce que** les moyens d'immobilisation (74, 86) comportent une bague d'immobilisation (74) annulaire comportant au moins un élément d'immobilisation (80) qui présente une excroissance (84) radiale conçue pour coopérer avec une série de cavités (86) complémentaires délimitées chacune sur la tête porte-buses (14) de façon à immobiliser ladite tête dans ses position prédéterminées incrémentalement, l'excroissance (84) étant escamotable radialement pour permettre la rotation de la tête porte-buses (14) entre deux positions prédéterminées.

6. Dispositif support de buses (10) selon la revendication 5, **caractérisé en ce que** la bague d'immobilisation (74) comporte des moyens de solidarisation (76) en rotation sur le moyeu (16) du corps (12), autour de l'axe (A) de rotation, par coopération de forme, et **en ce que** lesdits moyens de solidarisation (76) sont conçus pour permettre le démontage de la bague d'immobilisation (74) sur le corps (12) associé.

7. Dispositif support de buses (10) selon l'une quelconque des revendications précédentes, **caractérisé en ce qu'**il comporte un dispositif anti-goutte comprenant :
- une première chambre (30) dans laquelle le passage d'entrée (24) et le passage de sortie (26) débouchent,
- une seconde chambre (58) juxtaposée à la première chambre (30),
- une première membrane (48) obturatrice qui est conçue pour être entraînée dans une position de fermeture dans laquelle elle interrompt la communication entre le passage d'entrée (24) et le passage de sortie (26), et une seconde membrane (60) obturatrice qui est adossée à la première membrane (48) et qui présente une aire supérieure à l'aire de la première membrane (48), l'ensemble constitué par la première membrane (48) et la seconde membrane (60) étant interposé entre la première chambre (30) et la seconde chambre (58),
- un organe de commande qui permet d'augmenter la pression dans la seconde chambre (58) de sorte que la seconde membrane (60) applique une force sur la première membrane (48) pour entraîner la première membrane (48) dans sa position de fermeture.

8. Dispositif support de buses (10) selon la revendication 7, **caractérisé en ce qu'**il comporte :
- un premier bouchon (50) tubulaire qui est vissé sur le corps (12) et qui délimite un premier tronçon de serrage (52) annulaire plaquant axialement un bord périphérique de la première membrane (48) contre un épaulement formé dans le corps (12), et une butée axiale (53) bloquant axialement la tête porte-buses (14) sur le corps (12),
- un second bouchon (54) borgne qui est vissé sur le premier bouchon (50) et qui comporte un second tronçon de serrage (56) annulaire plaquant axialement un bord périphérique de la seconde membrane (60) contre un épaulement formé dans le premier bouchon (50).

9. Dispositif support de buses (10) selon la revendication 8, **caractérisé en ce que** le second bouchon (54) est équipé d'une première prise (70) permettant son dévissage manuel, et une seconde prise (72) adaptée pour coopérer avec un outil permettant le dévissage du second bouchon (54).

10. Dispositif support de buses (10) selon l'une quelconque des revendications 8 ou 9, **caractérisé en ce que** le second bouchon (54) comporte un premier insert (64a) formant raccord pour l'alimentation en fluide sous pression de la seconde chambre (58), et un second insert (64b) formant raccord pour l'alimentation en fluide sous pression d'un dispositif support de buses supplémentaire depuis la seconde chambre (58).

11. Dispositif support de buses (10) selon l'une quelconque des revendications précédentes, **caractérisé en ce qu'**il comporte un dispositif d'éclairage (128) conçu pour éclairer au moins le spectre de pulvérisation du fluide éjecté par le dispositif support de buses (10).

12. Dispositif support de buses (10) selon l'une quelconque des revendications précédentes, **caractérisé en ce qu'**il comporte un élément de nettoyage qui est agencé dans le passage d'entrée (24) pour rendre le fluide turbulent en s'opposant en partie à son écoulement.

## Patentansprüche

1. Düsentragvorrichtung (10), in der Art Folgendes umfassend:
- ein Gehäuse (12), das einen Eingangsdurchlass (24) für eine Flüssigkeit und zumindest einen Ausgangsdurchlass (26) aufweist, und das einen Rotationsabschnitt aufweist, der eine Nabe (16) bildet, die sich um eine Rotationsachse (A) herum erstreckt,
- einen Düsenträgerkopf (14), der um die Rotationsachse (A) drehend auf der Nabe (16) des Gehäuses (12) montiert ist, und der gestaltet ist, um zugleich zumindest zwei Düsen zu tragen, und
- Arretierungsmittel (74, 86) zum Arretieren der Rotation des Düsenträgerkopfes (14) auf dem Gehäuse (12) in einer Vielzahl von vorbestimmten Positionen, wobei in zumindest einigen unter ihnen eine der Düsen mit dem Ausgangsdurchlass (26) des Gehäuses (12) verbunden ist,
**dadurch gekennzeichnet, dass** die Vorrichtung (10) mit einem Rotationsantriebsmechanismus des Düsenträgerkopfes (14) ausgestattet ist, Folgendes umfassend:
- eine Vielzahl von Antriebszähnen (88), die in regelmäßiger Form um die Rotationsachse (A) auf dem Düsenträgerkopf (14) angeordnet sind,
- ein Antriebselement (90), das mit zumindest einer einziehbaren Mitnehmerklinke (98) ausgestattet ist, die ein freies Ende aufweist, das ausgeführt ist, um die Antriebszähne (88) nacheinander anzuschieben, wobei das Antriebselement (90) um die Rotationsachse (A) schwingend entsprechend einer Hinbewegung auf dem Gehäuse (12) montiert ist, im Laufe derer die Klinke (98) den Düsenträgerkopf (14) in inkrementeller Form bis zu einer vorbestimmten Position durch Zusammenwirken mit einem der Antriebszähne (88) antreibt, sowie einer Rückbewegung, im Laufe derer die Klinke (98) eingezogen ist,
- einen Aktor (106), der einen Betätigungsstift (118) umfasst, der bewegungstechnisch am Antriebselement (90) angeschlossen ist, um das Antriebselement (90) in eine Schwingbewegung anzutreiben.

2. Düsentragvorrichtung (10) nach Anspruch 1, **dadurch gekennzeichnet, dass** der Aktor (106) ein Zylinder ist, der den Betätigungsstift (118) in eine Richtung senkrecht zur Rotationsachse (A) zwischen einer ausgefahrenen Position und einer eingefahrenen Position in Bewegung versetzt, wobei der Betätigungsstift (118) mit einem Verbindungsfinger (122) ausgestattet ist, der sich parallel zur Rotationsachse (A) erstreckt und der ein freies Ende aufweist, das mit einer ergänzenden Aufnahme (126) zusammenwirkt, die durch das Antriebselement (90) eingegrenzt wird, um das Antriebselement (90) durch eine Hin- und Herbewegung des Betätigungsstifts (118) in eine Schwingbewegung zu versetzen.

3. Düsentragvorrichtung (10) nach einem der vorhergehenden Ansprüche, **dadurch gekennzeichnet, dass** das Antriebselement (90) die Form eines kreisförmigen Rings aufweist, der in abnehmbarer Form um die Rotationsachse (A) schwingend auf der Nabe (16) des Gehäuses (12) montiert ist.

4. Düsentragvorrichtung (10) nach einem der vorhergehenden Ansprüche, **dadurch gekennzeichnet, dass** die Klinke (98) eine Kreisbogenform aufweist, die sich im Allgemeinen von einem elastisch verformbaren Sockel (100) bis zu einem freien Ende (102) um die Rotationsachse (A) herum erstreckt, das ausgeführt ist, um die Antriebszähne (88) nacheinander um die Rotationsachse (A) anzuschieben.

5. Düsentragvorrichtung (10) nach einem der vorhergehenden Ansprüche, **dadurch gekennzeichnet, dass** die Arretierungsmittel (74, 86) einen kreisförmigen Arretierungsring (74) umfassen, der zumindest ein Arretierungselement (80) umfasst, das einen radialen Auswuchs (84) aufweist, der gestaltet ist, um mit einer Reihe von ergänzenden Vertiefungen (86) zusammenzuwirken, die jeweils von einem Düsenträgerkopf (14) eingegrenzt werden, um den besagten Kopf in seinen vorbestimmten Positionen inkrementell zu arretieren, wobei der Auswuchs (84) radial einziehbar ist, um die Rotation des Düsenträgerkopfes (14) zwischen zwei vorbestimmten Positionen zu ermöglichen.

6. Düsentragvorrichtung (10) nach Anspruch 5, **dadurch gekennzeichnet, dass** der Arretierungsring (74) Drehverbindungsmittel (76) auf der Nabe (16) des Gehäuses (12) um die Rotationsachse (A) herum durch Formzusammenwirkung umfasst, und dadurch, dass die besagten Verbindungsmittel (76) gestaltet sind, um die Demontage des Arretierungsrings (74) am zugehörigen Gehäuse (12) zu ermöglichen.

7. Düsentragvorrichtung (10) nach einem der vorhergehenden Ansprüche, **dadurch gekennzeichnet, dass** sie eine Tropfstoppvorrichtung umfasst, Folgendes umfassend:
- eine erste Kammer (30), in welche der Eingangsdurchlass (24) und der Ausgangsdurchlass (26) münden,
- eine zweite Kammer (58), die neben der ersten Kammer (30) angeordnet ist,
- eine erste Verschlussmembran (48), die gestaltet ist, um in eine Schließposition angetrieben zu werden, in der sie die Verbindung zwischen dem Eingangsdurchlass (24) und dem Ausgangsdurchlass (26) unterbricht, und eine zweite Verschlussmembran (60), die an die erste Membran (48) angebaut ist, und die eine Fläche aufweist, die größer ist, als die Fläche der ersten Membran (48), wobei die Einheit, die durch die erste Membran (48) und die zweite Membran (60) gebildet wird, zwischen die erste Kammer (30) und die zweite Kammer (58) eingesetzt wird,
- ein Steuerungsorgan, welches die Erhöhung des Drucks in der zweiten Kammer (58) ermöglicht, sodass die zweite Membran (60) eine Kraft an die erste Membran (48) anlegt, um die erste Membran (48) in ihre Schließposition anzutreiben.

8. Düsentragvorrichtung (10) nach Anspruch 7, **dadurch gekennzeichnet, dass** sie Folgendes umfasst:
- einen ersten röhrenförmigen Stopfen (50), der auf das Gehäuse (12) geschraubt wird, und der einen ersten kreisförmigen Spannabschnitt (52) eingrenzt, der einen umlaufenden Rand der ersten Membran (48) axial gegen ein Ansatzstück drückt, das im Gehäuse (12) gebildet wird, und einen axialen Anschlag (53), der den Düsenträgerkopf (14) axial auf dem Gehäuse (12) blockiert,
- einen zweiten Blindstopfen (54), der auf den ersten Stopfen (50) geschraubt wird, und der einen zweiten kreisförmigen Spannabschnitt (56) umfasst, der der einen umlaufenden Rand der zweiten Membran (60) axial gegen ein Ansatzstück drückt, das im ersten Stopfen (50) gebildet wird.

9. Düsentragvorrichtung (10) nach Anspruch 8, **dadurch gekennzeichnet, dass** der zweite Stopfen (54) mit einer ersten Fassung (70) ausgestattet ist, die sein manuelles Abschrauben ermöglicht, sowie einer zweiten Fassung (72), die ausgeführt ist, um mit einem Werkzeug zusammenzuwirken, welches das Abschrauben des zweiten Stopfens (54) ermöglicht.

10. Düsentragvorrichtung (10) nach einem der Ansprüche 8 oder 9, **dadurch gekennzeichnet, dass** der zweite Stopfen (54) einen ersten Einsatz (64a) umfasst, der einen Anschluss zur Versorgung der zweiten Kammer (58) mit einer unter Druck stehenden Flüssigkeit bildet, und einen zweiten Einsatz (64b), der einen Anschluss zur Versorgung einer zusätzlichen Düsentragvorrichtung mit einer unter Druck stehenden Flüssigkeit aus der zweiten Kammer (58) bildet.

11. Düsentragvorrichtung (10) nach einem der vorhergehenden Ansprüche, **dadurch gekennzeichnet, dass** sie eine Beleuchtungsvorrichtung (128) umfasst, die gestaltet ist, um zumindest das Sprühspektrum der durch die Düsentragvorrichtung (10) ausgestoßenen Flüssigkeit zu beleuchten.

12. Düsentragvorrichtung (10) nach einem der vorhergehenden Ansprüche, **dadurch gekennzeichnet, dass** sie ein Reinigungselement umfasst, das im Eingangsdurchlass (24) angeordnet ist, um die Flüssigkeit turbulent zu machen, indem man sich teilweise ihrer Strömung entgegenstellt.

## Claims

1. A nozzle support device (10) of the type including:
- a body (12) which has an inlet passage (24) of a fluid and at least one outlet passage (26), and which includes a section of revolution forming a hub (16) which extends about an axis of rotation (A),
- a nozzle-holder head (14) which is rotatably mounted on the hub (16) of the body (12) about the axis of rotation (A), and which is designed to carry simultaneously at least two nozzles, and
- immobilizing means (74, 86) for immobilizing the nozzle-holder head (14) in rotation on the body (12) in a plurality of predetermined positions, at least in some of which one of the nozzles is connected to the outlet passage (26) of the body (12),
**characterized in that** the device (10) is equipped with a mechanism for driving the nozzle-holder head (14) in rotation, including:
- a plurality of drive teeth (88) which are arranged in a regular manner about the axis of rotation (A) on the nozzle-holder head (14),
- a drive element (90) equipped with at least one retractable drive pawl (98) which has a free end adapted to push the drive teeth (88) successively, the drive element (90) being mounted to oscillate on the body (12), about the axis of rotation (A), in a forth movement during which the pawl (98) incrementally drives the nozzle-holder head (14) up to a predetermined position by cooperation with one of the drive teeth (88), and one back movement during which the pawl (98) is retracted,
- an actuator (106) including an actuating rod (118) which is movably connected on the drive element (90) to cause the drive element (90) to be displaced in an oscillatory manner.

2. The nozzle support device (10) according to claim 1, **characterized in that** the actuator (106) is a cylinder which causes the actuating rod (118) to be displaced in a direction perpendicular to the axis of rotation (A) between an extended position and a retracted position, the actuating rod (118) being equipped with a connecting finger (122) which extends parallel to the axis of rotation (A) and which has a free end cooperating with a complementary housing (126) delimited by the drive element (90), so as to cause the drive element (90) to be displaced in an oscillatory manner by reciprocating movement of the actuating rod (118).

3. The nozzle support device (10) according to any one of the preceding claims, **characterized in that** the drive element (90) has the shape of an annular ring which is mounted to oscillate on the hub (16) of the body (12), about the axis of rotation (A), in a removable manner.

4. The nozzle support device (10) according to any one of the preceding claims, **characterized in that** the pawl (98) has a circular arc shape which extends generally about the axis of rotation (A), from an elastically deformable base (100), up to a free end (102) adapted to urge the drive teeth (88) successively, about the axis of rotation (A).

5. The nozzle support device (10) according to any one of the preceding claims, **characterized in that** the immobilizing means (74, 86) include an annular immobilizing ring (74) including at least one immobilizing element (80) which has a radial protuberance (84) designed to cooperate with a series of complementary cavities (86) each delimited on the nozzle-holder (14) so as to immobilize said head in its incrementally predetermined positions, the protrusion (84) being radially retractable to allow the rotation of the nozzle-holder head (14) between two predetermined positions.

6. The nozzle support device (10) according to claim 5, **characterized in that** the immobilizing ring (74) includes securing means (76) in rotation on the hub (16) of the body (12), about the axis of rotation (A), by form-fitting, and **in that** said securing means (76) are designed to allow the disassembling of the immobilizing ring (74) on the associated body (12).

7. The nozzle support device (10) according to any one of the preceding claims, **characterized in that** it includes an anti-drop device comprising:
- a first chamber (30) in which the inlet passage (24) and the outlet passage (26) open,
- a second chamber (58) juxtaposed with the first chamber (30),
- a first obturator membrane (48) which is designed to be driven in a closed position in which it interrupts the communication between the inlet passage (24) and the outlet passage (26), and a second obturator membrane (60) leaning on the first membrane (48) and which has an area greater than the area of the first membrane (48), the assembly constituted by the first membrane (48) and the second membrane (60) being interposed between the first chamber (30) and the second chamber (58),
- a control member which allows increasing the pressure in the second chamber (58) so that the second membrane (60) applies a force on the first membrane (48) to drive the first membrane (48) in its closed position.

8. The nozzle support device (10) according to claim 7, **characterized in that** it includes:
- a first tubular plug (50) which is screwed on the body (12) and which delimits a first annular clamping section (52) axially pressing a peripheral edge of the first membrane (48) against a shoulder formed in the body (12), and an axial stop (53) axially blocking the nozzle-holder head (14) on the body (12),
- a second blind plug (54) which is screwed on the first plug (50) and which includes a second annular clamping section (56) axially pressing a peripheral edge of the second membrane (60) against a shoulder formed in the first plug (50).

9. The nozzle support device (10) according to claim 8, **characterized in that** the second plug (54) is equipped with a first socket (70) allowing its manual unscrewing, and a second socket (72) adapted to cooperate with a tool allowing the unscrewing the second plug (54).

10. The nozzle support device (10) according to any one of claims 8 or 9, **characterized in that** the second plug (54) includes a first insert (64a) forming a connection for supplying the second chamber (58) with pressurized fluid, and a second insert (64b) forming a connection for supplying an additional nozzle support device with pressurized fluid from the second chamber (58).

11. The nozzle support device (10) according to any one of the preceding claims, **characterized in that** it includes a lighting device (128) designed to illuminate at least the spray spectrum of the fluid ejected by the nozzle support device (10).

12. The nozzle support device (10) according to any one of the preceding claims, **characterized in that** it includes a cleaning element which is arranged in the inlet passage (24) so as to make the fluid turbulent by being partially opposing its flow.
